# EUROPEAN PATENT APPLICATION

(11) **EP 1 193 049 A1**
(43) Date of publication of application: **03.04.2002**
(21) Application number: 99954004.0
(22) Date of filing: 11.11.1999
(51) Int. Cl.: B32B 27/08, B32B 31/00, B41M 1/30, B44C 5/04

(54) **PROCESS FOR PRODUCING A BODY HAVING PRINTED IMAGES, AND BODY OBTAINED BY SUCH PROCESS**

(30) Priority: 11.11.1998 ES 9802349
(71) Applicant: De la Cruz Molina, Christina M., 16002 Cuenca (ES)
(72) Inventor: De la Cruz Molina, Christina M., 16002 Cuenca (ES)
(86) International application number: ES9900363
(87) International publication number: WO0027630

(57) **Abstract**

On a transparent or translucid acetate or vinil sheet (1), images are printed by using any conventinal printing means such as ink injection, laser, sublimation, etc. A trnasparent PVC, poliester sheet (3) is fixed to the printed face (2) of the sheet (1) by using transparent adhesive (4, 5) applied to both faces, and, in turn a support (6) which can be transparent or opaque, rigid or flexible, is fixed thereto so that the images are perfectly within the stratified body and are visible through the support (6) when the latter is transparent, or visible through the acetate sheet (1) when said support is opaque. It is possible to implant within said stratified body, into housings (9) or traversing orifices (10), LED diodes (11) which are associated to a printed and rigid or flexible circuit (12) fixed by means of sewn adhesive or any otherppropriate means to the acetate sheet (1), said diodes conferring to the laminar body a luminiscent aspect.

## Description

### AIM OF THE INVENTION

This invention is about a process for obtaining a multi-layered laminated object with images printed on it, that in addition to offering certain characteristics in relation with physical durability, incorporates printed images that increase its esthetic quality.

With the process of this invention a multi-layered object with images printed on it is obtained by economical and conventional printing methods, such as ink jet printing, laser printing, sublimation and others, thus leaving the images perfectly protected during normal use of any type of object obtained by the laminating process about to be described.

The invention is applicable for the obtaining of objects with printed images on them that can be utilized in the manufacture of different types of objects such as purses, wallets, lamps, furniture, advertising stands, bookcovers, etc. . .

### BACKGROUND OF THE INVENTION

As part of the practical application of the invention, polyvinyl chloride (PVC) is normally used as a primary material, due to the optimum qualities it possesses: its resistance to handling, as well as other aspects.
The PVC lamina utilized should incorporate printed images in order to increase the esthetic quality of the object which it is going to form part of.

The processes of printing on PVC are limited to conventional printing methods such as offset printing and other similar methods, since other less expensive printing methods such as inkjet printing, laser printing, sublimation, etc. require the use of heat as part of the printing process, that is, onto PVC, which this material cannot withstand.

In addition, and as an added problem, in conventional printing methods the printed image comes in direct contact when handled or with the elements during normal use of the object which said lamina forms part of, thereby resulting in a relatively rapid deterioration of the images printed on it. In order to solve this problem it is necessary to conveniently fix, after printing, a transparent, protective lamina onto the PVC lamina, which has negative repercussions in terms of the cost of production of the product.

### DESCRIPTION OF THE INVENTION

The process that the invention proposes is based on the use of a lamina made of acetate, vinyl or another possible transparent or translucent material, that due to its inherent quality allows printing methods that require heat, such as laser printing or sublimation, etc...

On top of this acetate or vinyl lamina, and after the corresponding printing that can be either in color or in black and white (depending on the desired result), a transparent PVC lamina prepared with adhesive on both sides and protected by waxpaper or silicon paper (discarded at the moment of assembly) is fixed to the acetate lamina with printed images. The exposed adhesive coat must be ready for its fixing onto the aforementioned two pieces (i.e., that have already been fixed to each other) onto any type of support, whether transparent or opaque, this support being that which finally will serve for the realization of the product. Instead of a PVC lamina with double-sided adhesive, a separate adhesive can be directly applied, that is, it can be fixed without a carrier lamina. The support to which the lamina with printed images and the lamina prepared with adhesive is fixed may be rigid or flexible, and either transparent, translucent or opaque as far as PVC supports, metachrylate supports, etc. are concerned.

In this way a multi-layered lamina is obtained from which several different types of objects can be made such as the aforementioned purses, wallets, furniture, lamps, etc., that will be transparent or translucent in nature when the support material is also. That is, when the support is transparent, the printed images underneath will be visible through said support; when the support is opaque the multi-layered laminated object will be visible only through the acetate lamina. This means that the images will appear in an inverted position, a position which can be changed via adequate and inverted printing of the same images in the first phase of the process.

In this case, that is, when the support is opaque and the images have to be viewed on the side of the multi-layered lamina opposite the support, the acetate lamina with images must be covered by a second lamina made of PVC, polyester or a similar material, and fixed to the acetate lamina with a coat of transparent adhesive.

In any case, in addition to the use of an inexpensive method of printing, the printed images are perfectly protected from normal use and handling of the object made up of the multi-layered plastic lamina.

Obviously, the adhesive used for fixing the different layers, and especially the adhesive used for fixing the acetate lamina to the lamina made of PVC, polyester or a similar material, should be made of substances that do not erode the ink used during printing, and of course, it should be transparent and not a corrosive that might erode any of the materials used.

Therefore, the object obtained from the process of this invention will be structured like a "sandwich" in which there is either a lamina made of acetate, vinyl or another appropriate material that is printed with images on one side, this side being coated with a layer of adhesive by which the lamina is fixed to a lamina made of PVC, polyester or a similar material, and, on to this lamina made of PVC, polyester or a similar material, another layer of adhesive is applied to fix the previous assembly to the support, without differentiating whether the support is opaque or transparent, as the adhesives, the lamina made of PVC, polyester or a similar material are transparent or translucent, and the acetate lamina is transparent or translucent in nature.

In accordance with the characteristics of the invention, it has been foreseen that the ornamental effect of the printed images can be increased through illumination and that in this sense and at the end phase of the creation of the multi-layered plastic object, it is possible to add to said multi-layered plastic object holes that run transversely through the layers of said multi-layered lamina that can either pass through all of the layers or not. The holes must be of dimensions adequate enough for the insertion of luminescent diodes, which will be conveniently connected with a printed circuit (either flexible or rigid, similar to the multi-layered lamina) that connects to an energy source. The printed circuit must be fixed to the multi-layered lamina by means of adhesive, stitching, by pieces that snap or fit together, etc., and fixed to the internal side of the multi-layered lamina, creating a flexible and luminescent assembly.

Obviously when the luminescent diodes pass through the top lamina of the multi-layered lamina, the support can be either opaque or transparent in nature, whereas when the holes of the diodes do not pass completely through the support, it should be transparent or transluscent in nature.

### DESCRIPTION OF THE DRAWINGS

In order to complement the present description and with the goal of providing a better understanding of the characteristics of the invention, a set of drawings of an illustrative but not limiting nature accompany said description as follows:
Figure 1. - This figure shows with a cross-sectioned illustration, the first phase of a multi-layered plastic lamina with printed images that constitute the goal of the present invention.
Figure 2. - This figure shows, with an illustration similar to the previous figure, the second phase of the process.
Figure 3. - This figure shows, also with an illustration similar to the previous figures, the final phase of the process that corresponds with the final product.
Figure 4. - This figure shows, also with an illustration similar to the previous figures, the final product when the support is opaque in nature.
Figure 5. - This figure shows, with an illustration similar to figure 3, the same assembly of said figure in the alternative realization where the multi-layered plastic lamina has integrated luminescent diodes to its matrix.

### PREFERRED REALIZATION OF THE INVENTION

Upon viewing these figures, one can observe how, starting with one lamina (1) of acetate or vinyl, either transparent or translucent on whose side (2), which must be the internal side, the desired images are printed with any traditional method of printing, for example inkjet printing, laser printing, sublimation, etc. is used.

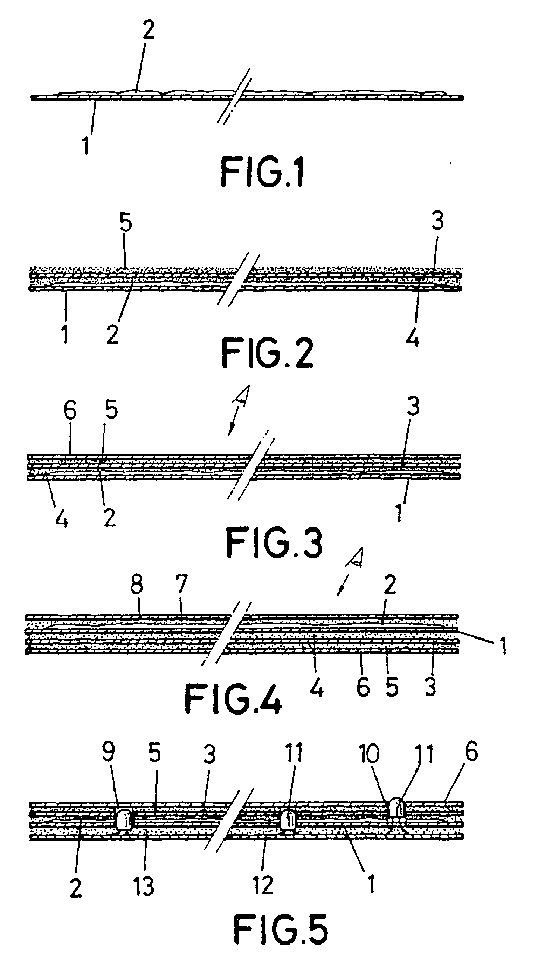

Once the acetate lamina (1) is properly printed, one proceeds to a second phase, the placing of a PVC lamina (3) upon lamina (1), specifically on the side printed with images (2), which is fixed to the same by means of a layer of transparent adhesive (4) and which on its other side has a second layer of transparent adhesive (5), as is illustrated in Figure 2, in order fix it, in the final phase of the process, to a support (6) which can be of any appropriate material, maintaining the flexibility or rigidity of all the components, without distinction as to whether or not the support is transparent or opaque. This adhesive, which is applied to both sides of the lamina (3), can be substituted with an independent layer of adhesive not applied to a transparent or translucent lamina made of PVC, polyester or similar material, and with this layer of adhesive the acetate or printed image is fixed to the rigid or flexible, transparent or opaque support.

The layers of adhesive (4) and (5), in addition to being transparent in order to allow the printed images on side (2) of the acetate (1) to be seen without losing their visibility or quality, should not be corrosive for any of materials used, that is, neither for the acetate (1), nor the PVC (3), nor for the material that the support (6) is composed of.

As has already been stated previously and in accordance with the preferred realization of the invention, a lamina (3) with adhesive on both sides made of PVC, polyester or a similar material, and whose adhesive layers (4) and (5) will be protected by protective sheets not represented in the drawings that will be discarded at the moment that said adhesive lamina (3) is fixed o the acetate lamina (1) and to the support (6), or perhaps a separate adhesive without a carrier will be used, that is, fixed directly to the printed lamina or support.

In the specific case where the support (6) is opaque in nature, a case where the viewing of the images will obviously be done on the opposite side of the multi-layered lamina, it has been foreseen that the printed acetate lamina (1) should be covered externally by a transparent lamina made of PVC, polyester or similar material (8), and fixed by means of a layer of transparent adhesive (7), in order to increase the superficial texture of the assembly.

When in addition a luminescent enhancing effect for the plastic multi-layered lamina is desired, as has been illustrated in Figure 4, holes that do not pass completely through all of the layers (9) or holes which do pass through the multi-layered assembly completely (10) can be made (both types of holes facing the exterior side of the multi-layered assembly) in order to hold luminescent diodes (11) which are conveniently fixed to a printed circuit lamina (12), that will be flexible in nature and which will be fixed by means of a layer of adhesive (13) to the multi-layered plastic lamina assembly, thereby forming an assembly that is in effect one unit, and which is either flexible or rigid in nature, depending on the case.

Obviously when the luminescent diodes (11) are placed in the aforementioned holes that do not pass completely through all the layers (9), the support (6) should be transparent or translucent in nature, in order to allow light to pass through said support, whereas in the case that said luminescent diodes are located in holes that do pass completely through the top lamina of the assembly (10), the support (6) can be either transparent or opaque.

As also has been stated previously, the lamina with printed images can be fixed to rigid objects such as metacrylate, plastics, crystal, etc., thus constituting an excellent publicity object, or to flexible objects such as PVC, polyester or similar material, or to supports with certain elasticity.

## Claims

1. A process for obtaining an object with printed images, **characterized by** its being composed of an acetate, vinyl or similar material lamina (1), capable of being printed on but transparent or translucent in nature, on top of whose sides chosen images can be printed by means of a traditional printing system such as ink jet printing, laser printing, sublimation or others, having made certain that on the printed side (2) of said acetate lamina (1) and together with a layer of adhesive (4), a PVC, polyester or similar material lamina (3) is fixed, or the adhesive is applied without a transporting lamina to said acetate lamina to which is fixed on its other side and together with another coat of adhesive (5) a support (6) which constitutes the essentially resistent element of the assembly, a support which likewise possesses the capability of having adhesive applied to it or not.

2. A process for obtaining an object with printed images, in accordance with claim #1, **characterized by** the fact that the acetate or vinyl lamina (1) is transparent or translucent in nature, as well as the lamina made of PVC, polyester or similar material or carrier (3), if used, is transparent in nature; the adhesive that constitutes the nexus of the union (4-5) between the different layers also being transparent in nature, whereas the support (6) can be either transparent or opaque, rigid or flexible, so that in the first case the side to be viewed of the object to be obtained with the plastic multi-layered lamina will correspond with the side of said transparent support, whereas in the second case the images will result visible only through the acetate lamina and as an inverted image.

3. A process for obtaining an object with printed images, in accordance with the above claims, **characterized by** its intermediate layer or carrier made of PVC, polyester or similar material and with adhesive on both sides, which is protected previous to fixing with protective sheets of parafin or silicon paper, that are disposed of in the moment of fixing of said adhesive lamina made of PVC (3) to the acetate lamina (1), and of the support (6) to the aforementioned assembly.

4. A process for obtaining an assembled object with printed images, in accordance with the above claims, **characterized by** its support (6), which when it is opaque and when the viewing of the printed images must be through the opposite side of the multi-layered lamina, the acetate lamina (1) is covered on by means of another transparent support lamina (8), which is fixed to the acetate lamina (1) with adhesive which is also transparent, the opaque support being capable of use with adhesive.

5. A process for obtaining an object with printed images, in accordance with the above claims, **characterized by** the option in the final and complementary phase, wherein holes (9) may be made that do not pass through the entire multi-layered lamina (1, 4, 3, 5, 6), or holes (10) that do pass through the top layer of the multi-layered lamina, with adequate distribution, into which luminescent diodes (11) may be located, which are conveniently connected to a printed circuit (12) which is rigid or flexible in nature, and that is likewise fixed by adhesive (13) to the external side o the acetate or vinyl lamina (1)in such a manner that said diodes provide a luminescent effect to the multi-layered lamina that works in collaboration with the printed images.

6. A process for obtaining an object with printed images, in accordance with above claim #4, **characterized by** the fact that when the luminous diodes (11) are located in holes that do not pass (9) completely through the multi-layered lamina a transparent support (6) must be used, whereas when the luminous diodes (11) are located in holes (10) that do pass completely through the multi-layered lamina, either a transparent or opaque support (6) may be used.

7. A process for obtaining an object with printed images, in accordance with the above claims, **characterized by** the fact that it consists of a stratified object in which the first layer (1) is composed of acetate, vinyl or a similar material, and is transparent or translucent and capable of being printed on with images on one of its sides (2), and to said side with images by means of a layer of adhesive (4) a lamina transparent in nature, which constitutes the intermediary layer of the multi-layered lamina and which by means of another layer of adhesive (5) is fixed to a support (6), which is opposite to the acetate or vinyl lamina (1), which can be tranparent or opaque, as well as flexible.

8. A process for obtaining an object with printed images, in accordance with above claim #7, **characterized by** the fact that when the support (6) is opaque in nature, the acetate lamina (1) is covered externally by a second, transparent layer (8), which is fixed to the acetate lamina by means of an adhesive which is also transparent.

9. A process for obtaining an object with printed images, in accordance with above claim #7, **characterized by** the fact that it incorporates, in adequate distribution, a variety of holes that do not pass entirely through the multi-layered lamina (9), or holes that do pass entirely through the multi-layered lamina (10), in which luminescent diodes (11) are located and which confer a luminescent effect to the viewed side of the multi-layered lamina, said diodes (11) being connected with a printed circuit (12), which is rigid or flexible in nature and fixed to the external side by means of a layer of adhesive (13) to the external side of the acetate or vinyl lamina (1).
